# EUROPEAN PATENT SPECIFICATION

(11) **EP 3 093 389 B1**
(45) Date of publication and mention of the grant of the patent: **13.11.2019**
(21) Application number: 15170245.3
(22) Date of filing: 02.06.2015
(51) Int. Cl.: D21C 3/02, D21C 3/06, D21H 11/02, D21H 13/08

(54) **DISSOLVING PULP**
AUFLÖSUNG VON PULPE
DISSOLUTION DE LA PÂTE À PAPIER

(30) Priority: 12.05.2015 SG 201503723
(43) Date of publication of application: 16.11.2016
(73) Proprietor: PT Asia Pacific Rayon, 10230 Jakarta Pusat (ID)
(72) Inventor: Devanesan, Alagaratnam Joseph, 048624 Singapore (SG); Chapman, Alan A, Riau, 28300 Sumatra (ID); Ginting, Eduward, Riau, 28000 Sumatra (ID)
(74) Representative: HGF Limited

(56) References cited:
- EP-A1- 0 442 806
- WO-A1-2010/046532
- US-A1- 2015 107 789

## Description

### Technical Field

The present invention generally relates to pulp processing and more specifically to an alternative pulp and methods of producing the same.

### Background Art

Dissolving pulp is a bleached wood pulp that has a high cellulose content, e.g. more than about 90% cellulose content, or more than about 96% cellulose content. It is typically bleached to a high level of brightness and has specific properties, such as a uniform molecular weight distribution. It is called dissolving pulp because it is not made into paper but dissolved into a solvent or otherwise made into a homogeneous solution which can then be spun to produce textile fibres or further chemically reacted to produce a wide range of cellulose derivatives.

Many wood species can be used to produce dissolving pulp, however pine and eucalypt species are predominantly used today. The majority of dissolving pulp is produced from hardwood species primarily due to availability, density, cost and relative ease of delignification. Annual plants such as reed, bagasse and bamboo have also been tried in the past, however, the difficulty in reducing the silica content of the resultant pulps has proved troublesome and their use is not widespread.

As the selection of particular hard wood species for making dissolving pulp requires substantial knowledge of the chemical and physical properties of the wood species, efforts to explore the possibility of using other hard wood materials for dissolving grade pulp production have been minimal at best.

Notably, dissolving grade wood pulp can be used to produce viscose. Viscose (also called viscose rayon) is a man-made cellulose-based fibre produced by chemically treating natural cellulose, predominantly dissolving grade wood pulp, using a viscose process. Sometimes cellulose from cotton fibres (cotton linters) is used but this is not the norm. The viscose process can be used to produce rayon fibres with different physical and chemical properties depending on what is required to produce end products, which can include woven, non-woven and high tenacity varieties.

Viscose rayon has many properties similar to cotton. It dyes easily, does not shrink when heated and is biodegradable. Consequently, it is used in many textile and apparel applications and is often blended with other fibres. It has good air permeability and is a good heat conductor, which makes it a cool comfortable fibre suitable for use in warm weather. It is also used in disposable hygiene products due to its high moisture absorbency which is greater than that of cotton.

Similarly, efforts to explore the possibility of using dissolving pulp produced from other wood species have been minimal.

Hence, there is a need to provide an alternative dissolving pulp, methods of preparing the same, and methods of using the dissolving pulp for preparing novel viscose fibers.

### Summary

In an aspect, there is provided a dissolving pulp comprising cellulosic material consisting of Acacia crassicarpa. Advantageously, unlike other taxonomically close species, e.g., Acacia mangium, Acacia crassicarpa has been surprisingly found to comprise relatively low amounts of lipophilic content or lipophilic extractives, which makes it suited for use in preparing a dissolving pulp which meets stringent industrial requirements.

Also disclosed is a cellulosic composition comprising pulp of Acacia crassicarpa, characterized in that the Acacia crassicarpa pulp is at least 50 wt% by solids content of said composition.

Also disclosed is a composition comprising Acacia crassicarpa wood chips, and at least one hydrolysing medium.

The use of the composition for preparing a dissolving pulp is disclosed herein.

In another aspect, there is provided a method of preparing dissolving pulp, the method comprising: (a) hydrolysing a composition comprising cellulosic or a lignocellulosic material consisting of Acacia crassicarpa to thereby form a treated cellulosic or lignocellulosic composition; (b) heating the treated composition under conditions to produce said dissolving pulp.

In a further aspect, there is provided a method of producing regenerated cellulose fibres, the method comprising: (a) base treatment of a dissolving pulp consisting of Acacia crassicarpa to produce cellulose xanthate; (b) neutralizing said cellulose xanthate to produce said regenerated cellulose fibres.

In another aspect, there is provided regenerated cellulose fibre comprising cellulosic material consisting of Acacia crassicarpa, the cellulosic material of Acacia crassicarpa being characterized by a lipophilic content of between 0 to 0.20 wt%.

In a still further aspect, there is provided a textile comprising regenerated cellulose fibre as disclosed herein.

### Definitions

The following words and terms used herein shall have the meaning indicated:

The term "lipophilic constituents" include fatty acids, sterols, hydrocarbons, steroid hydrocarbons and ketones that are present in wood and are soluble in organic solvents. Lipophilic constituents may be extracted by organic solvents such as dichloromethane (DCM) and acetone. Hence, lipophilic constituents may be referred to as "lipophilic extractives", or more specifically, "DCM extractives" or "acetone extractives". The term "lipophilic content" is also used interchangeably herein.

The term "cellulose" or grammatical variants thereof, refers to a homopolymer of β(1→4) linked D-glucose units that form a linear chain. Cellulose can contain several hundred to several thousand or more glucose units, making cellulose a polysaccharide. Cellulose is found in many natural products, such as the cell walls of plants, and thus can be found in wood, pulp and cotton, among others. In some embodiments, "cellulose" refers to organic material or biomass that is substantially free of lignin.

The term "lignocellulose" or grammatical variants thereof, is used herein to refer to organic material or biomass that contain cellulose, hemicellulose and lignin. The carbohydrate polymers (cellulose and hemicelluloses) are tightly bound to the lignin. Generally, these materials may also contain xylan, protein, and/or other carbohydrates, such as starch. Lignocellulosic material is found, for example, in the stems, leaves, hulls, husks, and cobs of plants or leaves, branches, and wood of trees. Lignocellulosic material can include virgin plant biomass and/or non-virgin plant biomass such as agricultural biomass, commercial organics, construction and demolition debris, municipal solid waste, waste paper, and yard waste. Common forms of lignocellulosic material include trees, shrubs, grasses, wheat, wheat straw, sugar cane bagasse, corn, corn husks, corn kernel including fibre from kernels, products and by-products from milling of grains such as corn, rice, wheat, and barley (including wet milling and dry milling), as well as municipal solid waste, waste paper, and yard waste. The lignocellulosic material can also be, but is not limited to, herbaceous material, agricultural residues, forestry residues, and paper mill residues. Additional examples include but are not limited to branches, bushes, canes, corn and corn husks, energy crops, forests, fruits, flowers, grains, grasses, herbaceous crops, leaves, bark, needles, logs, roots, saplings, short rotation woody crops, shrubs, switch grasses, trees, vegetables, fruit peels, vines, sugar beet pulp, wheat middlings, oat hulls, hard and soft woods, organic waste materials generated from agricultural processes including farming and forestry activities, specifically including forestry wood waste, or a mixture thereof. Lignocellulosic material may comprise bleached materials, such as bleached pulp, or unbleached materials.

As used herein, the term "hemicellulose" refers to a heteropolymer containing different saccharide units, such as, but not limited to, xylose, mannose, galactose, rhamnose and arabinose. Hemicellulose forms a branched polymer with several hundred to several thousand sugar units. Hemicellulose can include both pentose and hexose sugars.

The word "substantially" does not exclude "completely" e.g. a composition which is "substantially free" from Y may be completely free from Y. Where necessary, the word "substantially" may be omitted from the definition of the invention.

Unless specified otherwise, the terms "comprising" and "comprise", and grammatical variants thereof, are intended to represent "open" or "inclusive" language such that they include recited elements but also permit inclusion of additional, unrecited elements.

As used herein, the term "about", in the context of concentrations of components of the formulations, typically means +/- 5% of the stated value, more typically +/- 4% of the stated value, more typically +/- 3% of the stated value, more typically, +/- 2% of the stated value, even more typically +/- 1% of the stated value, and even more typically +/- 0.5% of the stated value.

Throughout this disclosure, certain embodiments may be disclosed in a range format. It should be understood that the description in range format is merely for convenience and brevity and should not be construed as an inflexible limitation on the scope of the disclosed ranges. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Certain embodiments may also be described broadly and generically herein. Each of the narrower species and subgeneric groupings falling within the generic disclosure also form part of the disclosure. This includes the generic description of the embodiments with a proviso or negative limitation removing any subject matter from the genus, regardless of whether or not the excised material is specifically recited herein.

### Brief Description of Drawings

The accompanying drawings illustrate a disclosed embodiment and serves to explain the principles of the disclosed embodiment. It is to be understood, however, that the drawings are designed for purposes of illustration only, and not as a definition of the limits of the invention.
**Fig. 1** shows an illustration of a pre-hydrolysis Kraft process according to an embodiment of the present disclosure.
**Fig. 2** shows an illustration of a viscose process according to an embodiment of the present disclosure.
**Fig. 3** shows a graph of the pre-ageing behaviour of laboratory prepared alkali cellulose from three samples referred to in Example 2: Acacia crassicarpa pre-hydrolysis Kraft dissolving pulp, Eucalyptus pre-hydrolysis Kraft dissolving pulp and a reference commercially available Eucalyptus pulp.
**Fig. 4** shows a graph of the relative particle volume distributions of diluted laboratory prepared viscose dope solutions upon ripening from three samples referred to in Example 2: Acacia crassicarpa pre-hydrolysis Kraft dissolving pulp, Eucalyptus pre-hydrolysis Kraft dissolving pulp and a reference commercially available Eucalyptus pulp.
**Fig. 5** shows a graph of the post-ripening behaviour of laboratory prepared viscose dope solutions from three samples referred to in Example 2: Acacia crassicarpa pre-hydrolysis Kraft dissolving pulp, Eucalyptus pre-hydrolysis Kraft dissolving pulp and a reference commercially available Eucalyptus pulp.

### Detailed Description

The present disclosure serves to explore the possibility of using Acacia for the production of dissolving pulp and using pre-hydrolysis Kraft dissolving pulp produced from Acacia crassicarpa for the production of viscose fibres.

Many wood species have been used for commercial Kraft pulp production. However, the Acacia species have not been used for commercial dissolving grade pulp production. Kraft pulp is differentiated from dissolving pulp in that lignin and hemicellulose are removed from dissolving pulp. The removal of lignin and hemicellulose renders the pulp soluble and hence, is a "dissolving" pulp. Furthermore, the removal of lignin and hemicellulose increases the cellulosic content of the pulp to result in a pulp with stronger mechanical properties.

Therefore, dissolving pulp is a composition comprising a cellulosic pulp of raw wood material. Dissolving pulp or dissolving grade pulp may be produced from wood using a process as disclosed herein.

There are different commercial specifications for dissolving grade pulp depending on its application. Typical pulp specifications for dissolving grade pulp used for viscose rayon production are shown in Table 1 below.

**[Table 1]**

| No | Parameters | Unit | Specification |
|---|---|---|---|
| 1 | Brightness | % ISO | ≥ 89.0 |
| 2 | Whiteness | % ISO | Min 78.0 |
| 3 | Viscosity | Cp | 11.0 - 14.0 |
| | | ml/gr | 401 - 456 |
| 4 | Pentosan | % | ≤ 3.0 |
| 5 | S10 | % | ≤ 7.5 |
| 6 | S18 | % | ≤ 4.0 |
| 7 | Alpha Cellulose | % | ≥ 94.0 |
| 8 | Ash | % | ≤ 0.10 |
| 9 | Silica | ppm | ≤ 80.0 |
| 10 | Calcium | ppm | ≤ 75 |
| 11 | Magnesium | ppm | ≤ 150 |
| 12 | Sodium | ppm | ≤ 300 |
| 13 | iron | ppm | ≤ 15 |
| 14 | DCM Extractives | % | ≤ 0.20 |

It has been discovered that Acacia crassicarpa contains a low amount of lipophilic constituents and thus can meet pulp specifications required for dissolving grade pulp. Lipophilic constituents (or lipophilic extractives) include fatty acids, sterols, hydrocarbons, steroid hydrocarbons and ketones that are present in wood and are soluble in organic solvents. The presence of lipophilic content in wood has negative effects on the pulping process and the quality of the produced dissolving pulp. For example, the reducing properties of pulp may be affected by sterols and saturated fatty acids with a carbon chain length of less than C₂₀. The viscosity of pulp may increase with an increase amount of sterol residues, and result in difficulty in operability of the pulping process. Further, an increase in the amount of lipophilic content may negatively affect the yield of alpha cellulose. Alpha cellulose is desirable as it has the highest degree of polymerization and is the most stable as compared to hemicellulose, beta cellulose and gamma cellulose. Hemicelluloses are amorphous and therefore contribute to the mechanical strength of pulp or fibres in a lesser effect as compared to celluloses.

Accordingly, in some embodiments, there is provided a dissolving pulp comprising cellulosic material consisting of Acacia crassicarpa.

Lipophilic constituents in wood are extracted by organic solvents, such as dichloromethane, acetone, chloroform and diethyl ether. The dichloromethane (DCM) extractives of Acacia crassicarpa may be less than about 1 wt%, or less than about 0.5 wt%, or less than about 0.4 wt%, or about 0.33 wt% or less, or less than about 0.3 wt%, or less than about 0.25 wt%, or less than about 0.2 wt%, or less than about 0.1 wt%, or between 0 to about 0.2 wt%, of the wood; and less than about 0.2 wt%, or about 0.1 wt% or less of the pulp. As a comparison, the DCM extractives of Acacia Mangium are about 1.21 wt% of the wood and about 0.29 wt% of the pulp. The acetone extractives of Acacia crassicarpa may be less than about 0.5 wt%, or less than about 0.4 wt%, or less than about 0.3 wt%, or about 0.2 wt% or less of the pulp.

Therefore, Acacia crassicarpa advantageously has superior chemical properties compared to other Acacia species. Further advantageously, because Acacia crassicarpa has lower lipophilic constituents, the wood fibres can be easily segregated and operability of the wood and pulp during the entire supply chain and production processes can be easily managed. In embodiments, Acacia crassicarpa is used as a raw material in the production of dissolving pulp.

Polysaccharides yielding pentose sugars upon hydrolysis are called pentosans. Xylan (a type of hemicellulose) is an example of a pentosan. The acidic pre-hydrolysis step as disclosed herein degrades the hemicelluloses in the raw wood material. Therefore, the amount of pentosan in dissolving pulp indicates the amount of hemicellulose left in the produced dissolving pulp. The dissolving pulp comprising Acacia crassicarpa may have between about 2.0 mg and about 3.0 mg of pentosans per 100 mg of raw wood material. Therefore, the disclosed dissolving pulp may have an amount of pentosan between about 2.0 wt% and about 3.0 wt%. In embodiments, the amount of pentosan is less than about 2.9 wt%, or less than about 2.8 wt%, or less than about 2.7 wt%, or less than about 2.6 wt%, or less than about 2.5 wt%, and more than about 3.0 wt%.

The disclosed dissolving pulp may have a total alpha cellulosic content of more than about 90 wt%, or more than about 95 wt%, or more than about 96 wt%, of total carbohydrates in the dissolving pulp. The disclosed dissolving pulp may have an alpha cellulose content of more than about 90 wt%, or more than about 91 wt%, or more than about 92 wt%, or more than about 93 wt%, or about 94 wt% or more, or about 95 wt% or more, or about 96 wt% or more, of total carbohydrates in the dissolving pulp. The disclosed dissolving pulp may have an alpha cellulose content of at least between about 90 wt% to about 99 wt% of total carbohydrates in the dissolving pulp. In an embodiment, the disclosed dissolving pulp may have an alpha cellulose content of about 96.4 wt% of total carbohydrates in the dissolving pulp.

The amount of hemicellulose present in the dissolving pulp may be more than about 2.5%, or more than about 3%, or more than about 3.1%, or more than about 3.2%, of total carbohydrates in the dissolving pulp.

Alkali resistances are important to predict product yield and the proportion of high molecular weight cellulose fraction. The resistance of the cellulose in the dissolving pulp to 18% sodium hydroxide solution is termed "R18", while the resistance of the cellulose in the dissolving pulp to 10% sodium hydroxide solution is termed "R10". An 18% sodium hydroxide solution (R18) dissolves hemicellulose, whereas a 10% sodium hydroxide solution (R10) dissolves both low molecular weight cellulose and hemicellulose. A higher proportion of high molecular cellulose, e.g. alpha cellulose, is desirable and thus, higher R18 values are desirable. The resistance of the cellulose in the dissolving pulp in 18% sodium hydroxide solution may be more than about 95%, or more than about 96%, or more than about 97%, or more than about 98%.

The larger the difference between the R18 and the R10 values, the higher the amount of degraded cellulose in the dissolving pulp. In an embodiment, the difference between the R18 value and the R10 value of the disclosed dissolving pulp is more than about 0.5, or more than about 0.6, or more than about 0.7, or more than about 0.8, or more than about 0.9, or more than about 1.0.

The solubility of the cellulose in the dissolving pulp in 18% sodium hydroxide solution is termed "S18", while the solubility of the cellulose in the dissolving pulp to 10% sodium hydroxide solution is termed "S10". The S10 and S18 values are indicative of pulp solubility and indicate the amount of losses of material during pulp processing, which typically involves the use of sodium hydroxide solution. The S10 and S18 values are the converse of the respective R10 and R18 values, and are calculated by subtracting the respective R10 and R18 values from 100%. The solubility of the cellulose in the dissolving pulp in 18% sodium hydroxide solution may be less than about 5%, or less than about 4%, or less than about 3%, or less than about 2%. The solubility of the cellulose in the dissolving pulp in 10% sodium hydroxide solution may be less than about 10%, or less than about 8%, or less than about 7%, or less than about 6%, or less than about 5%. Dissolving pulp may be produced from wood using a pre-hydrolysis Kraft process as disclosed herein.

The Kraft (or sulphate) process is a commonly used pulping process where wood is treated and cooked using an aqueous alkaline mixture of sodium hydroxide and sodium sulfide. This treatment degrades and renders soluble the lignin within and between the wood fibres, enabling fibre separation.

"Pulping" generally refers to the process for achieving fibre separation. Wood and other organic plant materials comprise cellulose, hemicellulose, lignin and other minor components. Lignin is a network of polymers interspersed between individual fibres, and functions as an intercellular adhesive to cement individual wood fibres together. During a pulping process, lignin macromolecules are fragmented, thereby liberating the individual cellulosic fibres and dissolving impurities that may cause discoloration and future disintegration of the paper or other final product.

The production of dissolving pulp using the Kraft process utilizes an additional acidic pre-hydrolysis treatment step which is used to degrade the hemicelluloses contained in the wood, and is thus termed "a pre-hydrolysis Kraft process". This acidic pre-hydrolysis step is required due to the resistance of the hemicellulose components to degradation in alkaline media. The acidic liquor produced containing the degraded hemicellulose components is typically evaporated and burned for energy production or discarded as waste.

Accordingly, in embodiments, the method of preparing dissolving pulp comprises: (a) hydrolysing a composition comprising cellulosic or a lignocellulosic material consisting of Acacia crassicarpa to thereby form a treated cellulosic or lignocellulosic composition; (b) heating the treated composition under conditions to produce the dissolving pulp.

The yield of the dissolving pulp prepared according to the disclosed method may be more than about 30 wt%, or more than about 35 wt%, or more than about 36 wt%, or more than about 37 wt%, or more than about 38 wt%, or more than about 39 wt%, based on the raw wood material.

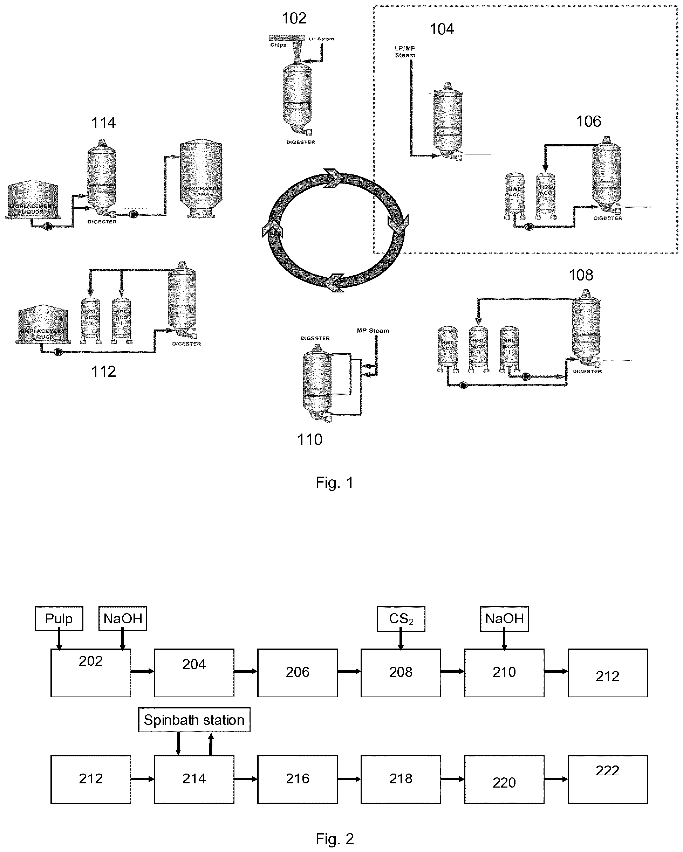

The pre-hydrolysis Kraft process for preparing dissolving pulp according to an embodiment of the present disclosure is illustrated in Fig. 1.

Referring to Fig. 1, the first step is to cut raw wood material into wood chips of an appropriate size for filling a digester vessel. For example, more than about 80 wt% of the wood chips may be sized at about 7 mm or larger and have a thickness of about 7 mm or less. A typical wood chip size distribution appropriate for filling a digester vessel is as follows: oversize chips having a size of about 45 mm or larger are at most 0.5 wt%; overthick chips having a thickness of about 8 mm or larger are at most 8 wt%; chips having a size of about 7 mm or larger and a thickness of about 7 mm or less (termed as "accepts") are at least 82.5 wt%; chips having a size of between about 3 mm and about 7 mm (termed as "small accepts") are at most 7 wt%; chips having a size of less than about 3 mm (termed as "fines") are at most 1 wt%; bark may be present at a maximum of 1 wt%.

The size of a wood chip refers to the diameter of the chip if substantially spherical, or the equivalent diameter of the chip relative to spherical chips if non-spherical.

The wood chips may be selected from the group consisting of: bark, stem, root and mixtures thereof. The wood may be selected from a plant characterized by a lipophilic content of less than 0.25 wt%. The wood may be selected from Acacia. The wood may be selected from Acacia crassicarpa.

The wood chips are added into a digester vessel in 102, wherein low pressure (LP) steam may be added to soften the wood chips. The LP steam may have a pressure of about 4.0-4.2 barg.

The digester vessel may be any digester suitable for heating and cooking wood in the pre-hydrolysis Kraft process. The digester vessel may be appropriately selected to be relatively heat resistant and relatively corrosion resistant.

In embodiments, the hydrolysing step comprises a step of treating the cellulosic or lignocellulosic material consisting of Acacia crassicarpa with a hydrolysing medium. The hydrolysing medium may react with the cellulosic or lignocellulosic material consisting of Acacia crassicarpa to break down hemicellulose. The polysaccharides of celluloses or hemicelluloses are hydrolysed to form low molecular weight carboxylic acids or organic acids. Hydrolysis is a reaction involving the breaking of a bond in a molecule using water. The reaction mainly occurs between an ion (such as a cation counter-ion of polysaccharide residues) and water molecules and often changes the pH of a solution. Therefore, acidic reaction products such as organic acids may form in the hydrolysis process, resulting in an acidic hydrolysate.

An example of a hydrolysing medium is steam or pressurised steam. In one embodiment, the hydrolysing medium is composed essentially of steam. The steam may be at a pressure and temperature as disclosed herein. In one embodiment, the treatment with steam may be conducted at one or two or a plurality of pressures. For example, in 104, steam in low to medium pressure may be added into the digester to heat the wood. The steam added may have a pressure between about 4 barg and about 12 barg. The steam added may have a temperature between about 150°C and about 200°C. The steam may be from a LP steam source, and have a pressure of about 4.0-4.2 barg and a temperature of about 150-153°C. The steam may be from a medium pressure (MP) steam source, and have a pressure of about 11.0-11.5 barg and a temperature of about 190-200°C. The steam may be alternated between the LP steam source and the MP steam source. The steam may be added to the bottom of the digester.

The hydrolysing step may be undertaken in a single step/stage or a plurality of steps/stages. In one embodiment, the wood chips may be treated consecutively with steam under varying pressure and temperature conditions.

The hydrolysis step may be undertaken until certain conditions are fulfilled. The wood may be treated under certain conditions for a predetermined amount of time. The certain conditions may include, for example, adding steam until the temperature of the wood chips is between about 160 and about 175°C and the pressure in the digester is about 7 barg, and maintaining these conditions for a duration of from about 60 minutes to about 120 minutes, or about 75 minutes to about 120 minutes, or about 90 minutes to about 120 minutes, or about 105 minutes to about 120 minutes, or about 60 minutes to about 105 minutes, or about 60 minutes to about 90 minutes, or about 75 minutes to about 105 minutes, or about 90 minutes to about 105 minutes, or about 90 minutes to about 100 minutes.

The hydrolysing step may be conducted until the hydrolysate has a pH of less than about 3, or less than about 2, or about pH 1 to about pH 3, or about pH 2 to about pH 3. The wood may be treated until the hydrolysate has a pH of less than about 3, or less than about 2, or about pH 1 to about pH 3, or about pH 2 to about pH 3. In one embodiment, the hydrolysate is condensed steam hydrolysate.

In 104, the steam may react with the constituents in the wood to produce reaction products that are acidic in nature. For example, the hemicellulose in the wood may be degraded, resulting in pulp that is advantageously higher in alpha cellulose content and has a more uniform cellulose molecular weight distribution as compared to pulp produced without an acidic pre-hydrolysis step. These properties are required particularly for the production of synthetic viscose rayon fibres. The acids produced may further enhance the hydrolysis of the polysaccharides of the hemicellulose.

In some embodiments, the composition undergoing acid hydrolysis comprises Acacia crassicarpa wood chips, and at least one hydrolysing medium. The disclosed composition may be used to prepare a dissolving pulp.

In 106, the acidic composition may be neutralized by adding an alkaline solution, e.g. hot white liquor (HWL), into the digester vessel. The HWL may be stored in a vessel HWL ACC. The HWL may be added at a temperature of between about 100°C and about 150°C, or between about 110°C and about 140°C, or about 135°C. The HWL may be introduced into the digester vessel, e.g. by pumping the HWL from a HWL source. White liquor is an aqueous alkaline mixture of sodium hydroxide and sodium sulfide. The sodium hydroxide may be present in the white liquor at a concentration of about 60 g/L to about 80 g/L, or about 70 g/L to about 75 g/L. The sodium sulfide may be present in the white liquor at a concentration of about 30 g/L to about 40 g/L, or about 34 g/L to about 35 g/L. The HWL may be fed to the digester vessel in a countercurrent direction or a concurrent direction relative to the wood material. In an embodiment, the HWL is fed to the bottom of the digester vessel to aid in contact of the HWL with the wood material in a countercurrent direction.

The waste product from the digester is termed black liquor. At this point, the hot black liquor (HBL) may contain carbohydrates from the degradation of hemicellulose. HBL may be removed from the top of the digester. HBL may be collected in a vessel HBL ACC II. The vessels that contain the hot white liquor and the hot black liquor may be any vessel suitable for the pre-hydrolysis Kraft process. The vessels that contain the hot white liquor and the hot black liquor may be individually appropriately selected to be relatively heat resistant and relatively corrosion resistant.

The Kraft process does not comprise steps 104 and 106.

In 108, more hot white liquor, e.g. from a vessel HWL ACC, may be added to the digester vessel. The HWL degrades and renders soluble the lignin within and between the wood fibres, thereby enabling fibre separation, to produce treated liquor. Lignin degradation may commence in 106 and continue on in 108, or may commence only in 108. The HWL may be added at a temperature of between about 100°C and about 150°C, or between about 110°C and about 140°C, or about 135°C. The HWL may be introduced into the digester vessel, e.g. by pumping the HWL from a HWL source. The HWL may be fed to the digester vessel in a countercurrent direction or a concurrent direction relative to the wood material. In an embodiment, the HWL is fed to the bottom of the digester vessel to aid in contact of the HWL with the wood material in a countercurrent direction.

In 108, hot black liquor (HBL) may be added to the digester vessel before, or at the same time, or after addition of the HWL. The HBL may be stored in a vessel HBL ACC I. The HBL may be added to enhance the degradation of lignin. The HBL may be added in an amount to complement the amount of HWL in the digester. The HBL may be added to make up the volume required in the cooking process. The HBL added in 108 may comprise a higher concentration of alkali to aid in the cooking process. The HBL may be introduced into the digester vessel, e.g. by pumping the HBL from a HBL source. The HBL may be fed to the digester vessel in a countercurrent direction or a concurrent direction relative to the wood material. In an embodiment, the HBL is fed to the bottom of the digester vessel to aid in contact of the HBL with the wood material in a countercurrent direction. The HBL and the HWL may be mixed before adding into the digester. The HBL and the HWL may be separately added into the digester.

At this point, the hot black liquor removed from the digester may contain carbohydrates from the degradation of hemicellulose and/or degraded lignin. The HBL may be removed from the top of the digester. The HBL may be collected in a vessel HBL ACC II.

In 110, medium pressure (MP) steam may be added into the digester to heat and cook the composition to produce dissolving pulp. The MP steam may have a pressure of about 10.5-11.5 barg, or about 11.0-11.5 barg, and a temperature of about 180-200°C, or about 190-200°C. The steam may be added to the digester, e.g. by injection, to the top and/or the bottom of the digester and/or to the middle of the digester where the reactions occur. The steam may be added until certain conditions are fulfilled. The cellulosic or lignocellulosic composition treated in the alkaline solution may be heated or cooked under certain conditions for a predetermined amount of time. The certain conditions may include, for example, adding steam until the temperature of the composition is between about 160 and about 170°C and maintaining these conditions for a duration of from about 30 minutes to about 60 minutes, or about 40 minutes to about 60 minutes, or about 50 minutes to about 60 minutes, or about 30 minutes to about 50 minutes, or about 30 minutes to about 40 minutes, or about 40 minutes to about 50 minutes, or about 45 minutes to about 60 minutes.

Accordingly, the heating or cooking step may comprise heating the treated composition in the presence of an alkaline solution. The alkaline solution may comprise white liquor and/or black liquor. The alkaline solution may comprise a mixture of NaOH and Na₂S.

In some embodiments, the cellulosic composition obtained after the cooking step comprises pulp of Acacia crassicarpa, characterized in that the Acacia crassicarpa is at least 50 wt%, or at least 55 wt%, or at least 60 wt%, by solids content of the cellulosic composition. The cellulosic composition may be washed or further refined to obtain the disclosed dissolving pulp.

In some embodiments, the disclosed cellulosic composition is characterized in that the pulp of Acacia crassicarpa is substantially free of lignin. In some embodiments, the disclosed cellulosic composition is characterized in that the pulp of Acacia crassicarpa is substantially free of lignin and has small amounts of hemicellulose such as those amounts disclosed herein. In some embodiments, the disclosed cellulosic composition is characterized in that the pulp of Acacia crassicarpa has a lipophilic content as disclosed herein, e.g. between 0 to about 0.20 wt%.

In some embodiments, the cellulosic composition further comprises a liquor mixture, said liquor mixture comprising lignin, carbohydrates, hemicellulose and inorganic salts.

After the cooking process, the dissolving pulp may be subjected to different pulp treatment processes. The pulp treatment processes may be selected as required. The pulp treatment processes may be arranged in a sequence as required. For example, the dissolving pulp may be subjected to oxygen delignification, in which oxygen and caustic are applied to the pulp. The dissolving pulp may be subjected to a chloride dioxide bleaching process (denoted by "D"), in which chlorine dioxide is applied to the pulp. The dissolving pulp may be subjected to another bleaching process, in which caustic (denoted by "E"), oxygen (denoted by "O") and hydrogen peroxide (denoted by "P") are applied to pulp at the same time (therefore denoted by "EOP").

In an embodiment, the dissolving pulp may be subjected to oxygen delignification, followed by bleaching using the sequence OD(EOP)DP.

The disclosed cellulosic composition may be used to prepare a dissolving pulp.

In 112, displacement liquor may be added to wash the pulp produced. The displacement liquor may be added to remove the hot black liquor from the digester. The inorganic chemicals of the process may be recovered for reuse or recycle. The organic components may be recovered for energy generation. The displacement liquor may comprise a brownstock wash solution, which is the pressate from the first brownstock pulp washing stage downstream of the digester cooking plant. The displacement liquor may be added to the bottom of the digester. The HBL may be removed from the top of the digester and collected in vessels HBL ACC I and HBL ACC II.

In 114, the produced dissolving pulp may be discharged out of the digester by the displacement liquor, and removed to a discharge tank. The dissolving pulp may be removed at the bottom of the digester.

In another example, dissolving pulp may be produced from wood using an acid sulfite process.

In the acid sulfite process, wood may be treated with an aqueous solution of sulfurous acid and the salt of a base chemical such as calcium or magnesium. The purpose of acid sulfite pulping is not to degrade or fragment the lignin, but to solubilize it by making it more hydrophilic in nature. Acid sulfite pulps may have comparatively lower hemi-cellulose content and higher cellulose content than pre-hydrolysis Kraft pulp with similar lignin content. Acid sulfite pulps may be relatively easy to bleach. The disclosed acid sulfite process may be capable of producing dissolving pulp with a cellulose content of more than about 90%, or more than about 91%, or more than about 92%, of total carbohydrates in the dissolving pulp.

However, the acid sulfite process may produce more pollution compared to the Kraft and pre-hydrolysis Kraft processes as a higher amount of SO₂ may be discharged to the atmosphere. The acid sulfite process may not be able to efficiently dissolve extractives and therefore, its use may be applicable to a smaller range of wood raw material species. Dissolving pulp may be produced using the acid sulfite process.

Advantageously, the cooking step of the disclosed pre-hydrolysis Kraft process may be conducted in a shorter duration than the cooking step of the acid sulfite process to achieve similar dissolving pulp quality. Advantageously, the disclosed pre-hydrolysis Kraft process may produce a mechanically stronger pulp than the acid sulfite process. Advantageously, the disclosed pre-hydrolysis Kraft process may involve easier recovery and reuse of the chemical reagents than the acid sulfite process. Advantageously, the disclosed pre-hydrolysis Kraft process may involve efficient bleaching technology to enable the relevant dissolving pulp requirements to be met.

Viscose may be produced from the disclosed dissolving pulp. The cellulose fibres from Acacia crassicarpa may be regenerated into viscose fibres. Accordingly, in embodiments, a method of producing regenerated cellulose fibres is provided. The method may comprise a step (a) of base treatment of a dissolving pulp of Acacia crassicarpa to produce cellulose xanthate. The method may comprise a step (b) of neutralizing the cellulose xanthate to produce the regenerated cellulose fibres.

The viscose process according to an embodiment of the present disclosure is illustrated in Fig. 2.

In 202, dissolving grade pulp is alkalized. Dissolving pulp and aqueous sodium hydroxide may be mixed together. The dissolving pulp may be added before, or at the same time, or after adding the aqueous sodium hydroxide. The concentration of the sodium hydroxide used may be between about 10 wt% and about 25 wt%, or between about 15 wt% and about 25 wt%, or between about 15 wt% and about 20 wt%, or about 18 wt%. The treatment of the dissolving pulp in aqueous sodium hydroxide may be conducted at a temperature between about 50°C and about 60°C, or between about 53°C and about 55°C. The pressure conditions of the alkaline treatment are not particularly limited and may be conducted at atmospheric pressure. The dissolving pulp may be one as disclosed herein. In embodiments, the dissolving pulp may comprise Acacia crassicarpa. In embodiments, a dissolving pulp of Acacia crassicarpa characterized by a lipophilic content of less than 0.25 wt% may be provided.

In 204, the alkalized pulp may be macerated, pressed and shredded. Step 202 may be conducted before or at the same time as step 204. The alcoholate groups of the cellulose molecules in the pulp react with the aqueous sodium hydroxide solution according to Reaction Scheme 1 below upon macerating the pulp in the aqueous sodium hydroxide solution to produce alkali cellulose.

[Reaction Scheme 1] (C₆H₁₀O₅)ₙ - OH + NaOH → (C₆H₁₀O₅)ₙ - O - Na + H₂O

Thereafter, pressing the alkali cellulose slurry removes the excess sodium hydroxide. Shredding the dried slurry produces alkali cellulose fragments.

In 206, the alkali cellulose fragments may undergo an ageing process where the fragments are exposed to oxygen. The ageing process may be conducted for a duration of anywhere from about 4 to about 6 hours, or about 5 hours. The exposure to oxygen may reduce the degree of polymerization of the cellulose to between about 400 and about 500.

In 208, the aged cellulose may be treated with carbon disulfide (CS₂) solution to form cellulose xanthate according to Reaction Scheme 2 below. Step 208 is known as Xanthation.

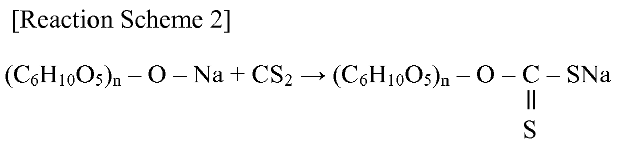

CS₂ may be added to the aged cellulose in an amount of about 30 wt% to about 40 wt% based on the dry weight of cellulose, e.g. oven dried cellulose. For example, 1000 kg of CS₂ may be added to 3 tons of cellulose on an oven dried basis. Alternatively, the aged cellulose may be pumped into a vessel of CS₂.

In 210, the cellulose xanthate may be dissolved in a weak aqueous sodium hydroxide solution to produce an orange syrupy liquid with a similar consistency to honey. The concentration of the sodium hydroxide used may be between about 10 g/L to about 20 g/L, or about 15 g/L to about 17 g/L. The orange syrupy liquid is a viscose solution.

Accordingly, the base treatment step may comprise treating the dissolving pulp with aqueous sodium hydroxide; ageing the treated dissolving pulp; and reaction of the aged dissolving pulp with carbon disulfide to form the cellulose xanthate.

The different concentrations of sodium hydroxide solutions may be prepared and stored in a soda lye station. Associated piping may fluidly connect the soda lye station with the vessel(s) containing the reaction.

In 212, the viscose solution may be ripened for a period of time in the presence of oxygen. The exposure to oxygen during ripening reduces the viscosity and degree of cellulose polymerization of the solution. The viscosity of the solution may be reduced to about 45-55 Pa·seconds. The degree of polymerization may be reduced to between about 400 and about 500. After ripening, the solution may be filtered to remove impurities, such as gels and undissolved fibres. The filtrate (or viscose dope) comprises predominantly cellulose and sodium hydroxide. The residue may be discarded or recycled. The filtrate may be de-aerated to remove dispersed gases. The impurities and dispersed gases contribute to problematic spinning and a poor quality final product and therefore are advantageously removed. Step 212 is completed when the required quality and ripeness is achieved. The ripeness achieved may be in the range of 15-20 degree Hottenroth, i.e. 15-20 ml of 10% ammonium chloride solution needed to coagulate the viscose. The time taken from dissolving of the cellulose xanthate in sodium hydroxide to the start of the spinning process may be anywhere between about 8 to 10 hours.

In 214, the filtrate may be subjected to a wet spinning process in a sulfuric acid solution. The concentration of the sulfuric acid solution in the spinbath solution may be from about 108 to about 112 g/L, or about 110 g/L. The wet spinning process may comprise pumping the viscose filtrate to spinnerets and extruding the viscose into the sulfuric acid spinbath liquid from the spinbath station to precipitate and regenerate the cellulose to form fibres. The wet spinning process may be conducted at a temperature of from about 45°C to about 50°C.

The reaction in the wet spinning process is according to Reaction Scheme 3 below.

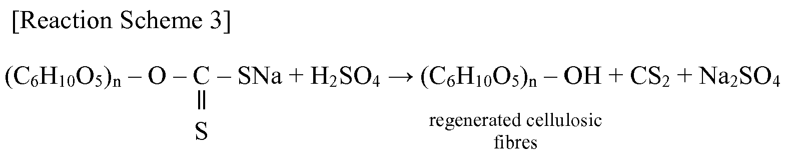

The CS₂ is expelled as a gas and sodium sulfate (Na₂SO₄) is formed as the major side product.

The used spinbath liquid may be passed/recycled back to the spinbath station to be filtered, de-aerated to remove dissolved CS₂ and H₂S, and warmed up to process temperature. To maintain the spinbath composition, water brought in from the viscose solution may be evaporated. The sodium sulfate side product formed by the spinning reaction according to Reaction Scheme 3 above and sulfuric acid in the spinbath may be removed by crystallization. Fresh sulfuric acid may be added to the spinbath composition.

The carbon disulfide (CS₂) evolved during the fibre formation and after treatment processes may be collected, condensed and reused. The waste gases with traces of CS₂ and H₂S may either be oxidized to give elemental sulfur (S), sulfur dioxide (SO₂) or sulfuric acid (H₂SO₄), or are further treated in adsorption plants.

Accordingly, the neutralizing step may comprise subjecting the cellulose xanthate to a wet spinning process in a sulfuric acid bath to thereby produce the regenerated cellulose fibres.

In 216, the regenerated cellulosic viscose fibres may be stretched. In 218, the stretched fibres may be cut into desired lengths. The cut fibres flushed down by gravity from the cutter are mechanically distributed over the whole width of a trough and will form fleece "swimming" on the hot water in the trough. Steam is injected into the hot water in order to expel all remaining CS₂ and H₂S from the fibres. The expelled gas forms bubbles which cause the fibre fleece to "swim" on the hot water. Due to continuous fresh supply from the cutter, the fibre fleece is gradually pushed forward until it reaches an after-treatment machine.

In 220, the cut fibres may be fed to the after-treatment machine, where they can undergo washing, desulphurising, bleaching and/or softening.

The after-treatment can typically be divided into the following washing and treatment sections:
a) Acid free washing (approximately 70degC)
b) First washing to ensure that all traces of acid are removed (approximately 70degC).
c) Desulphurisation with hot NaOH - Na₂S solution (2-3 g/L, approx. 65degC).

Traces of elementary sulphur and other sulphur compounds are removed here. The final dispersed sulphur on the fibre reacts with the NaOH in the solution according to the following equation:

[Reaction Scheme 4] 6 NaOH + 12 S → 2 Na₂S₂O₃ + 2 H₂O or Na₂S → Na₂S₅

The formed polysulfides are water soluble and hence can be washed out. Care has to be taken that the temperature of the washing water is above 45degC.
d) Second washing for removal of desulphurisation bath (approx. 60degC).
e) Bleaching with a solution of sodium hypochlorite, 1-2 g/L active chlorine, at pH 9-10 and temperature of 20-25degC.

The action of the NaOCl (sodium hypochlorite) is due to the fact that NaOCl hydrolyses into hypochloric acid which acts under oxygen split off as a very strong oxidizing agent. The degree of hydrolysis depends on pH and temperature. Acceleration is achieved by lower pH and higher temperature. However, one must be careful with radical bleaching not to damage the fibres. Hence, the conditions in the bath must be maintained constant.

If hygiene grade or food grade viscose fiber is required, then chlorine free bleaching is typically required. For this purpose, hydrogen peroxide is typically used. The bleaching action is also based on an oxidative reaction.
f) Third washing (approximately 30degC)
g) Final washing (approximately 60degC)
h) Softening (approximately 50degC)

Here, the softening agent, providing the fibre with the necessary characteristics for the subsequent textile operations, is brought onto the fibre. The type of softener must be chosen in view of the subsequent textile operations.

In between all washing and treatment sections, squeeze rollers may be used to remove excess liquid. The weight of these rollers and hence the press ratio can be adjusted by filling them with more or less water as required.

Before or after the softening section, press rollers may be used to remove adherent water as much as possible. The press rollers are adjustable with pneumatic pressure as required.

It is important to consider, in order:
- not to dilute the softening bath
- to bring as little humidity in the fibre as possible into the dryer (steam saving).

In 222, the treated viscose fibres may be dried, pressed and packed into bales.

Accordingly, in embodiments, regenerated cellulose fibres comprising cellulosic material of Acacia crassicarpa are provided. The cellulosic material of Acacia crassicarpa may be characterized by a lipophilic content of between 0 to 0.20 wt%. In embodiments, a textile comprising regenerated cellulose fibre as disclosed herein is provided.

It would be apparent that various other modifications and adaptations of the invention will be apparent to the person skilled in the art after reading the foregoing disclosure without departing from the spirit and scope of the invention and it is intended that all such modifications and adaptations come within the scope of the appended claims.

### Examples

Non-limiting examples of the invention and comparative examples will be further described in greater detail by reference to specific Examples, which should not be construed as in any way limiting the scope of the invention.

### Example 1

A laboratory study was conducted to investigate the use of Acacia crassicarpa to produce pre-hydrolysis Kraft dissolving pulp. Consumption figures as well as the resultant pulp quality data in order to produce commercial dissolving pulp were established. Dissolving pulp produced from Eucalyptus was used as the standard.

The detailed laboratory cooking conditions and results can be seen in Table 2 below.

**[Table 2]**

| Parameters | Acacia Crassicarpa | | Eucalyptus |
|---|---|---|---|
| P-factor | | 590 | 434 |
| Prehydrolysis temp | °C | 175 | 175 |
| Total prehydrolysis time | min | 67 | 62 |
| H-Factor | | 545 | 401 |
| Cooking temp | °C | 160 | 160 |
| Total cooking time | min | 81 | 64 |
| Total alkali consumption | kg/BDt | 236 | 237 |
| Yield | % on wood | 39.1 | 39.2 |
| Reject (total) | % on pulp | 0.05 | 0.05 |
| Kappa number | | 8.1 | 9.4 |
| Viscosity | ml/g | 912 | 1000 |
| ISO brightness | % | 41.6 | 43.6 |
| Cellulose | % of carbohydrates | 96.8 | 96.9 |
| Hemicellulose | % of carbohydrates | 3.2 | 3.1 |
| Pentosans | mg/100mg | 2.6 | 2.6 |
| Acetone Extractives | % | 0.2 | <0.1 |
| R18 | % | 97.3 | 98.1 |
| R10 | % | 96.4 | 97.1 |

| **Metals** | | | |
|---|---|---|---|
| Ca | mg/kg | 130 | 110 |
| Fe | mg/kg | 10 | 7 |
| Mn | mg/kg | <2 | 2 |
| Mg | mg/kg | 25 | 4 |

| **Fiber Characteristic** | | | |
|---|---|---|---|
| Fiber length L(l) | mm | 0.7 | 0.6 |
| Fiber width | micro-m | 15 | 115.2 |
| Coarseness | mg/m | 0.05 | 0.06 |
| Cell Wall Thickness | micro-m | 2.5 | 4.7 |
| Fines (n) | % | 12.2 | 8.4 |
| Curl | % | 21.4 | 17.5 |

The prehydrolysis-factor (P-factor) predicts the adjustments needed in cooking time and/or temperature to give the same degree of pulping and to produce pulp with predetermined characteristics. The pre-hydrolysis time for Acacia crassicarpa is slightly longer (5 mins) than that for Eucalyptus because a higher P-factor is required in order to achieve the pentosan target. However, the total cooking cycle time is within typical commercial dissolving pulp norms.

Good quality pulp at a relatively high yield of more than 39% based on the raw Acacia crassicarpa wood material was achieved. For unbleached pulp, Acacia crassicarpa had an R18 value of 97.3% and pentosan content of 2.6%.

This result is comparable with commercial Eucalyptus dissolving pulps.

After the cooking process, the dissolving pulp was subjected to oxygen delignification which was then followed by bleaching using the sequence OD(EOP)DP. Analysis of the bleached pulps is shown in Table 3 below.

**[Table 3]**

| Parameters | Acacia Crassicarpa | | Eucalyptus |
|---|---|---|---|
| Kappa number | | 0.3 | 0.4 |
| Viscosity | ml/g | 488 | 492 |
| ISO brightness | % | 91.8 | 92.2 |
| R10 | % | 95.1 | 96 |
| R18 | % | 97.1 | 98.2 |
| Pentosans | mg/100mg | 2.5 | 2.7 |
| Alpha cellulose | % | 96.5 | 97.1 |
| Ash content | % | 0.19 | 0.2 |
| Acetone extractives | % | <0.1 | <0.1 |

The above laboratory studies have shown that it is possible to meet all of the important parameters required for commercial dissolving pulp with controlled cooking and bleaching of Acacia crassicarpa, as shown in Table 3.

### Example 2

A laboratory study was conducted to determine the suitability of laboratory-prepared Acacia crassicarpa and Eucalyptus pre-hydrolysis Kraft dissolving pulps for the preparation of commercial grade viscose spinning solution. The results were compared against those obtained using a commercially available Eucalyptus dissolving pulp (reference pulp).

Viscose fibres were prepared according to the flowchart illustrated in Fig. 2.

The pressing behaviour of the prepared alkali cellulose pulps of step 204 prepared from dissolving grade Acacia crassicarpa corresponded to that typical of dissolving grade hardwood pulps.

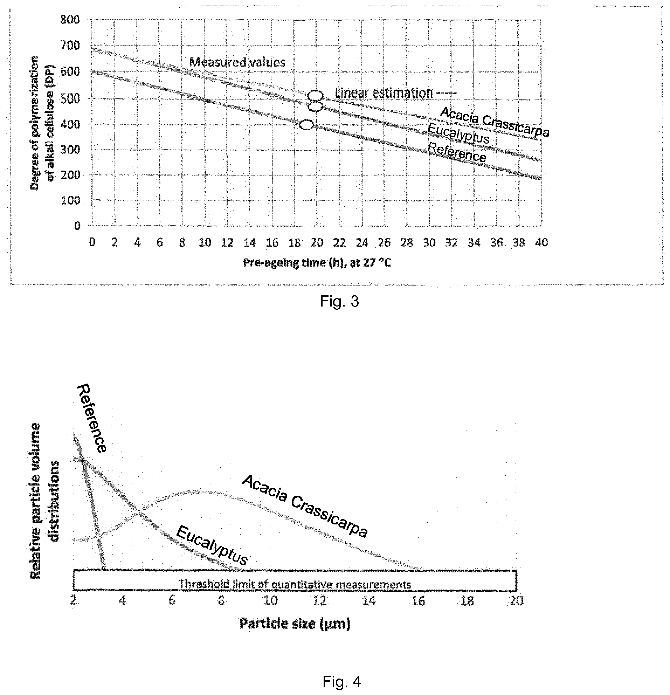

The alkali cellulose samples were then pre-aged in step 206. Although the starting values of the Degree of Polymerization and viscosity (DP/viscosity) of Acacia crassicarpa and Eucalyptus pre-hydrolysis Kraft dissolving pulps were similar, there were differences in the pre-ageing response of the pulps. Fig. 3 shows that the Eucalyptus pre-hydrolysis Kraft dissolving pulp is less viscous and the DP is reduced at a faster rate than the Acacia crassicarpa pre-hydrolysis Kraft dissolving pulp during the alkali cellulose ageing step. However, the DP-adjusted filtration index and filterability behaviour of the samples were within expected norms of commercial grade viscose solution (see Table 4 below).

Upon filtration in step 212, microscope analysis (not shown) indicated no presence of undissolved fibres or poorly dissolved gels within the viscose solutions prepared from the three pulp samples.

Upon ripening in step 212, it can be seen in Fig. 4 that the viscose solution prepared from Acacia crassicarpa had a higher mean particle size and a wider distribution than the other pulps tested.

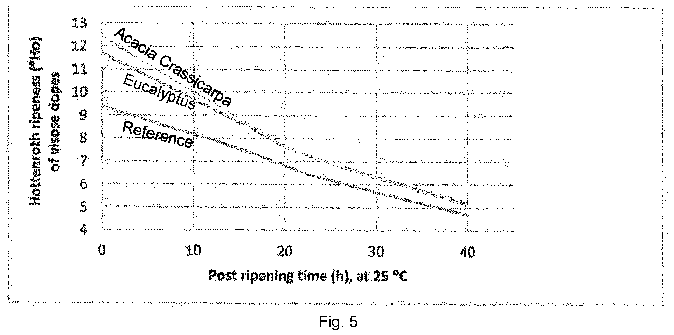

There was little difference in the post-ripening behaviour of the viscose solutions. However, as shown in Fig. 5, there was a slightly faster rate seen at the beginning with the Acacia crassicarpa solution.

The results of the laboratory investigation in this example show that viscose solution prepared from Acacia crassicarpa pre-hydrolysis Kraft dissolving pulp fulfills the common requirements suitable for use in the commercial production of viscose fibre.

**[Table 4]**

| **Sample code** | **V84/14,C5-prep** | **V84/14,A1-prDP** | **Reference** | **Guidelines** | **Methods/Comments** |
|---|---|---|---|---|---|
| Origin | *Eucalyptus* | *Acacia* | *Eucalyptus* | | |

| **Pulp raw material** | | | | | (*)Analyses performed by Valmet laboratory |
|---|---|---|---|---|---|
| Viscosity (ml/g) | 492(*) | 488(*) | 430 | | |
| R10/R18(%) | 96.0/98.2(*) | 95.0/97.1(*) | - | | |
| ISO-brightness (%) | 92.2(*) | 91.8(*) | - | | |
| Alphacellulose in pulp (%) | 97.1(*) | 96.5(*) | - | | |

| **Mercerization, pressing, shredding, pre-ageing** | | | | | |
|---|---|---|---|---|---|
| Amount of AD pulp used for mercerization (g) | 200 | 200 | 200 | 200 | |
| Alkali concentration of mercerization lye (g/l) | 205.5 | 205.5 | 2055 | 205 | |
| Mercerizing lye temperature (°C) | ok | ok | ok | 35±0.5°C | |
| Alpha cellulose content in pressed alkali cellulose (%) | 33.6 | 32.5 | 33.1 | 32-34% | |
| Total alkali content in pressed alkali cellulose (%) | 15.0 | 15.1 | 15.2 | 15-16% | |
| Pressing factor | 2.8 | 2.8 | 2.7 | | |
| Bulkdensity of alkali cellulose after shredding (g/l) | 214 | 221 | 220 | | |
| Cobalt catalyst added | ok | ok | ok | 0,9 ppm per AD pulp | |
| Activator/wetting agent added for mercerization | ok | ok | ok | 0,1% per AD pulp | |
| Pre-ageing temperature (°C) | ok | ok | ok | 27±0.5°C | |
| Pre-ageing time (h) | 20h | 20h | 18.5h | | |

| **Xanthogenation** | | | | | |
|---|---|---|---|---|---|
| Amount of alpha cellulose used for xanthogenation (g) | 125 | 125 | 125 | 125 | |
| Carbon disulphide addition per alpha cellulose (%) | 32% | 32% | 32% | 32% | |
| Xanthogenation temperature (°C) | ok | ok | ok | 30±0.5°C | |
| Xantogenation reaction time (min.) | 60min. | 60min. | 60min. | 60min. | |

| **xanthogenate** | | | | | |
|---|---|---|---|---|---|
| Dissolving time (min.) | 120min. | 120min. | 120min. | 120min. | |
| Dissolving temperature (°C) | ok | ok | ok | 18±0.5°C | |
| Viscose additive modifier added | ok | ok | ok | 0.2% per alpha | |

| **Viscose dope** | | | | | (**) Analyses were carried out from unfiltered viscose dope immediately after dissolving period |
|---|---|---|---|---|---|
| Ball fall viscosity (Pas) | 16.3(**) | 21.8(**) | 8.8(**) | - | |
| Ball fall viscosity, recalculated (Pas) | 13.0 | 18.4 | 6.5 | - | Viscosity values are recalculated to correspond the following composition of viscose: cellulose cont. 9.0%, NaOH 55% |
| Cellulose content | 9.5(**) | 9.4(**) | 9.6(**) | 9-10% | |
| Sodium hydroxide content | 5.9(**) | 5.9(**) | 5.8(**) | 5.5-6.0% | |
| Hottenroth ripeness after dissolving period (°Ho) | 11.7(**) | 12.4(**) | 9.4(**) | - | |
| k_{W} value | 204(**) | 247(**) | 129(**) | - | |
| k_{R} value (DP adjusted filterability index) | 106 | 115 | 86 | | K_{R}=F×K_{W}/η^0.4 where η is the ball fall time in seconds and F is the filter surface area of 4,0 cm² |

## Claims

1. A dissolving pulp comprising cellulosic material, wherein the cellulosic material consists of Acacia crassicarpa cellulosic material.

2. The dissolving pulp of claim 1, **characterized by** having a lipophilic content, wherein the lipophilic content is less than 0.25 wt%, or between 0 to 0.20 wt%, and/or **characterized by** an alpha-cellulose content of at least between 90 to 99 wt%.

3. The dissolving pulp of any one of claims 1-2, wherein the amount of pentosan is between 2.0 wt% and 3.0 wt%.

4. A method of preparing dissolving pulp, the method comprising: (a) hydrolysing a composition comprising cellulosic or a lignocellulosic material consisting of Acacia crassicarpa to thereby form a treated cellulosic or lignocellulosic composition; (b) heating the treated composition to produce said dissolving pulp.

5. The method of claim 4, wherein said hydrolysing step comprises a step of treating said cellulosic or lignocellulosic material consisting of Acacia crassicarpa with steam, optionally wherein said hydrolysing step is conducted until the pH of a hydrolysate is less than or equal to 3.

6. The method of any one of claims 4-5, wherein said heating step comprises heating said treated composition in the presence of an alkaline solution, optionally wherein said alkaline solution comprises a mixture of NaOH and Na₂S.

7. A method of producing regenerated cellulose fibres, the method comprising: (a) base treatment of a dissolving pulp consisting of Acacia crassicarpa to produce cellulose xanthate; (b) neutralizing said cellulose xanthate to produce said regenerated cellulose fibres, wherein the method optionally further comprises providing a dissolving pulp consisting of Acacia crassicarpa **characterized by** a lipophilic content of less than 0.25 wt%.

8. The method of claim 7, wherein said base treatment comprises treating the dissolving pulp with aqueous sodium hydroxide; ageing the treated dissolving pulp; and reacting the aged dissolving pulp with carbon disulfide to form said cellulose xanthate.

9. The method of claim 7 or 8, wherein said neutralizing step comprises subjecting the cellulose xanthate to a wet spinning process in a sulfuric acid bath to thereby produce said regenerated cellulose fibres.

10. Regenerated cellulose fibre comprising cellulosic material, the cellulosic material consisting of Acacia crassicarpa and being **characterized by** having a lipophilic content, wherein the lipophilic content is between 0 to 0.20 wt%.

11. A textile comprising regenerated cellulose fibre of claim 10.

## Patentansprüche

1. Chemiezellstoff, der Cellulosematerial umfasst, wobei das Cellulosematerial aus Cellulosematerial der *Acacia crassicarpa* besteht.

2. Chemiezellstoff nach Anspruch 1, **dadurch gekennzeichnet, dass** er einen lipophilen Gehalt aufweist, wobei der lipophile Gehalt bei weniger als 0,25 Gew.-% oder zwischen 0 und 0,20 Gew.-% liegt, und/oder durch einen Alpha-Cellulosegehalt von mindestens zwischen 90 und 99 Gew.-% gekennzeichnet.

3. Chemiezellstoff nach einem der Ansprüche 1-2, wobei die Pentosanmenge zwischen 2,0 Gew.-% und 3,0 Gew.-% liegt.

4. Verfahren zum Herstellen von Chemiezellstoff, wobei das Verfahren Folgendes umfasst: (a) Hydrolysieren einer Zusammensetzung, die ein Cellulosematerial oder lignocellulosehaltiges Material umfasst, das aus *Acacia crassicarpa* besteht, um dadurch eine behandelte Cellulosezusammensetzung oder lignocellulosehaltige Zusammensetzung zu bilden; (b) Erhitzen der behandelten Zusammensetzung, um den Chemiezellstoff herzustellen.

5. Verfahren nach Anspruch 4, wobei der Hydrolysierungsschritt einen Schritt des Behandelns des Cellulosematerials oder lignocellulosehaltigen Materials, das aus *Acacia crassicarpa* besteht, mit Dampf umfasst, wobei der Hydrolysierungsschritt gegebenenfalls ausgeführt wird, bis der pH-Wert eines Hydrolats kleiner oder gleich 3 ist.

6. Verfahren nach einem der Ansprüche 4-5, wobei der Erhitzungsschritt Erhitzen der behandelten Zusammensetzung in Anwesenheit einer alkalischen Lösung umfasst, wobei die alkalische Lösung gegebenenfalls ein Gemisch aus NaOH und Na₂S umfasst.

7. Verfahren zum Herstellen von Cellulosegeneratfasern, wobei das Verfahren Folgendes umfasst: (a) eine Basenbehandlung eines Chemiezellstoffs, der aus *Acacia crassicarpa* besteht, um Cellulosexanthat herzustellen; (b) Neutralisieren des Cellulosexanthats, um die Cellulosegeneratfasern herzustellen, wobei das Verfahren gegebenenfalls ferner Bereitstellen eines Chemiezellstoffs umfasst, der aus *Acacia crassicarpa* besteht und durch einen lipophilen Gehalt von weniger als 0,25 Gew.-% gekennzeichnet ist.

8. Verfahren nach Anspruch 7, wobei die Basenbehandlung Behandeln des Chemiezellstoffs mit wässrigem Natriumhydroxid umfasst; Alternlassen des behandelten Chemiezellstoffs; und Reagierenlassen des gealterten Chemiezellstoffs mit Kohlenstoffdisulfid, um Cellulosexanthat zu bilden.

9. Verfahren nach Anspruch 7 oder 8, wobei der Neutralisierungsschritt Unterziehen des Cellulosexanthats einem Nassspinnprozess in einem Schwefelsäurebad umfasst, um dadurch die Cellulosegeneratfasern herzustellen.

10. Cellulosegeneratfaser, umfassend Cellulosematerial, wobei das Cellulosematerial aus *Acacia crassicarpa* besteht und **dadurch gekennzeichnet ist, dass** es einen lipophilen Gehalt aufweist, wobei der lipophile Gehalt zwischen 0 und 0,20 Gew.-% liegt.

11. Textilmaterial, das die Cellulosegeneratfaser aus Anspruch 10 umfasst.

## Revendications

1. Pâte dissolvante comprenant un matériau cellulosique, dans laquelle le matériau cellulosique est constitué d'un matériau cellulosique d'Acacia crassicarpa.

2. Pâte dissolvante selon la revendication 1, **caractérisée en ce qu'**elle a un teneur lipophile, dans laquelle la teneur lipophile est inférieure à 0,25 % en poids, ou comprise entre 0 à 0,20 % en poids, et/ou **caractérisée par** une teneur en alpha-cellulose comprise entre au moins 90 à 99 % en poids.

3. Pâte dissolvante selon l'une quelconque des revendications 1 à 2, dans laquelle la quantité de pentosane est comprise entre 2,0 % en poids et 3,0 % en poids.

4. Procédé de préparation d'une pâte dissolvante, le procédé comprenant : (a) l'hydrolyse d'une composition comprenant un matériau cellulosique ou lignocellulosique constitué d'Acacia crassicarpa pour former ainsi une composition cellulosique ou lignocellulosique traitée ; (b) le chauffage de la composition traitée pour produire ladite pâte dissolvante.

5. Procédé selon la revendication 4, dans lequel ladite étape d'hydrolyse comprend une étape de traitement dudit matériau cellulosique ou lignocellulosique constitué d'Acacia crassicarpa avec de la vapeur, facultativement dans lequel ladite étape d'hydrolyse est menée jusqu'à ce que le pH d'un hydrolysat soit inférieur ou égal à 3.

6. Procédé selon l'une quelconque des revendications 4 à 5, dans lequel ladite étape de chauffage comprend le chauffage de ladite composition traitée en présence d'une solution alcaline, facultativement dans lequel ladite solution alcaline comprend un mélange de NaOH et de Na₂S.

7. Procédé de production de fibres de cellulose régénérées, le procédé comprenant : (a) le traitement basique d'une pulpe dissolvante constituée d'Acacia crassicarpa pour produire de la cellulose xanthate ; (b) la neutralisation dudit xanthate de cellulose pour produire lesdites fibres de cellulose régénérées, dans lequel le procédé comprend en outre facultativement la fourniture d'une pulpe dissolvante constituée d'Acacia crassicarpa **caractérisée par** une teneur lipophile inférieure à 0,25 % en poids.

8. Procédé selon la revendication 7, dans lequel ledit traitement basique comprend le traitement de la pulpe dissolvante avec de l'hydroxyde de sodium aqueux ; le vieillissement de la pulpe dissolvante traitée ; et la réaction de la pulpe dissolvante vieillie avec du disulfure de carbone pour former ledit xanthate de cellulose.

9. Procédé selon la revendication 7 ou 8, dans lequel ladite étape de neutralisation comprend le fait de soumettre le xanthate de cellulose à un procédé de filage au mouillé dans un bain d'acide sulfurique pour produire ainsi lesdites fibres de cellulose régénérées.

10. Fibre de cellulose régénérée comprenant un matériau cellulosique, le matériau cellulosique constitué d'Acacia crassicarpa et étant **caractérisé en ce qu'**il a une teneur lipophile, dans laquelle la teneur lipophile est comprise entre 0 à 0,20 % en poids.

11. Textile comprenant de la fibre de cellulose régénérée selon la revendication 10.
